# EUROPÄISCHE PATENTSCHRIFT

(11) **EP 2 742 518 B1**
(45) Veröffentlichungstag und Bekanntmachung des Hinweises auf die Patenterteilung: **16.09.2015**
(21) Anmeldenummer: 12746003.8
(22) Anmeldetag: 13.07.2012
(51) Int. Cl.: H01F 38/14, H01R 39/64, F16D 23/12

(54) **ELEKTRISCHE LEISTUNGSÜBERTRAGUNGSEINRICHTUNG**
ELECTRIC POWER TRANSMISSION DEVICE
DISPOSITIF DE TRANSMISSION DE PUISSANCE ÉLECTRIQUE

(30) Priorität: 08.08.2011 DE 102011080576
(43) Veröffentlichungstag der Anmeldung: 18.06.2014
(73) Patentinhaber: Schaeffler Technologies AG & Co. KG, 91074 Herzogenaurach (DE)
(72) Erfinder: BOROWSKI, Marco, 77830 Bühlertal (DE)
(86) Internationale Anmeldenummer: PCT/DE2012/000713
(87) Internationale Veröffentlichungsnummer: WO 2013/020537

(56) Entgegenhaltungen:
- DE-A1-102005 051 462
- DE-A1-102008 000 644
- US-A- 2 973 851
- US-A- 5 770 936

## Beschreibung

Die Erfindung betrifft eine elektrische Leistungsübertragungseinrichtung für eine drehbare Reibungskupplungseinrichtung, insbesondere für ein brennkraftmaschinengetriebenes Kraftfahrzeug, die Reibungskupplungseinrichtung aufweisend eine Betätigungseinrichtung mit wenigstens einem mit der Reibungskupplungseinrichtung drehbaren elektrischen Aktuator, die Leistungsübertragungseinrichtung aufweisend einen induktiven Drehübertrager mit einem einer elektrischen Leistungsquelle zugeordneten Stator und einem dem wenigstens einen Aktuator zugeordneten Rotor zur berührungslosen Übertragung elektrischer Energie zwischen dem Stator und dem Rotor.

Aus der DE 102 16 855 B4 ist eine Vorrichtung zur Stromübertragung bekannt von einem im Querschnitt ringförmigen Außenleiter auf einen konzentrisch angeordneten kreisförmigen Innenleiter, die sich gegeneinander auf der gemeinsamen Achse drehen, mit mehreren Kontaktrollen, die zwischen dem Außenleiter und dem Innenleiter anordenbar sind, die einen im Wesentlichen dem Abstand zwischen dem Innen- und Außenleiter entsprechenden Durchmesser aufweisen und die eine elektrisch leitende elastische Oberfläche besitzen, bei der die Kontaktrollen und in Abständen angeordnete Führungsrollen an einem Führungsring drehend gelagert sind, um die Stromübertragung bei verminderter Gleitreibung weiter zu verbessern.

Aus der deutschen Patentanmeldung mit dem Aktenzeichen DE 10 2011 104 412.8 ist eine Reibungskupplungseinrichtung, insbesondere für einen Antriebsstrang eines brennkraftmaschinengetriebenen Kraftfahrzeugs, bekannt, umfassend ein Eingangsteil mit einer Druckplatte und wenigstens einer bezüglich der Druckplatte begrenzt axial verlagerbaren Anpressplatte sowie wenigstens ein Ausgangsteil mit wenigstens einer Kupplungsscheibe, wobei die wenigstens eine Kupplungsscheibe zwischen der Druckplatte und der wenigstens einen Anpressplatte angeordnet ist und abhängig von einer Verlagerung der wenigstens einen Anpressplatte eine reibschlüssige Kraft-/Bewegungsübertragung zwischen Eingangsteil und Ausgangsteil ermöglicht ist, bei der zur Verlagerung der die wenigstens einen Anpressplatte eine Flaschenzugeinrichtung vorgesehen ist, um eine weitere Erhöhung der Übersetzung bei Betätigung zu ermöglicht, Ein- und Ausrückkräfte über den gesamten Verstellweg in Kupplungsachsrichtung aufzubringen und einen Bauraum besser auszunutzen. Diese Reibungskupplungseinrichtung kann zur Betätigung der Flaschenzugeinrichtung einen Elektromotor, insbesondere einen Linear-Servomotor, aufweisen. Eine derartige Reibungskupplungseinrichtung kann auch als Seilzugkupplung bezeichnet werden.

Aus der DE 10 2008 000644 A1 ist eine Leistungübertragungseinrichtung nach dem Oberbegriff von Anspruch 1 bekannt.

Der Erfindung liegt die Aufgabe zugrunde, bei einer eingangs genannten Leistungsübertragungseinrichtung eine Ausfallsicherheit zu erhöhen und einen Bauaufwand gering zu halten.
Die Lösung der Aufgabe erfolgt mit einer elektrische Leistungsübertragungseinrichtung für eine drehbare Reibungskupplungseinrichtung, insbesondere für ein brennkraftmaschinengetriebenes Kraftfahrzeug, die Reibungskupplungseinrichtung aufweisend eine Betätigungseinrichtung mit wenigstens einem mit der Reibungskupplungseinrichtung drehbaren elektrischen Aktuator, die Leistungsübertragungseinrichtung aufweisend einen induktiven Drehübertrager mit einem einer elektrischen Leistungsquelle zugeordneten Stator und einem dem wenigstens einen Aktuator zugeordneten Rotor zur berührungslosen Übertragung elektrischer Energie zwischen dem Stator und dem Rotor, bei der die Leistungsübertragungseinrichtung einen elektrischen Kontakt zur berührend leitenden Übertragung elektrischer Energie von der Leistungsquelle zu dem wenigstens einen Aktuator aufweist.
Die Reibungskupplungseinrichtung kann elektrisch betätigbar sein. Die Reibungskupplungseinrichtung kann eine Einfachkupplung aufweisen. Die Reibungskupplungseinrichtung kann eine Doppelkupplung mit einer ersten Kupplungseinrichtung und einer zweiten Kupplungseinrichtung aufweisen. Die Reibungskupplungseinrichtung kann eine gezogene Kupplungseinrichtung aufweisen. Die Reibungskupplungseinrichtung kann eine gedrückte Kupplungseinrichtung aufweisen. Die Reibungskupplungseinrichtung kann eine Feder aufweisen, die in Öffnungs- und/oder in Schließrichtung wirkt. Die Reibungskupplungseinrichtung kann eine Seilzugkupplung sein. Die Reibungskupplungseinrichtung kann eine Zahnradkupplung sein. Die Betätigungseinrichtung kann einen einzigen Aktuator aufweisen. Die Betätigungseinrichtung kann mehrere Aktuatoren aufweisen. Die Betätigungseinrichtung kann zwei Aktuatoren aufweisen. Ein erster Aktuator kann eine Betätigung einer ersten Kupplungseinrichtung einer Doppelkupplung ermöglichen. Ein zweiter Aktuator kann eine Betätigung einer zweiten Kupplungseinrichtung einer Doppelkupplung ermöglichen. Ein Aktuator kann eine Betätigung der Reibungskupplungseinrichtung in Öffnungs- und/oder in Schließrichtung ermöglichen. Ein Aktuator kann entgegen der Kraft einer Feder wirken.
Im Rahmen der vorliegenden Anmeldung ist unter "Reibungskupplung" eine Kupplung mit Eingangs- und Ausgangsteil zu verstehen, die ausgehend von einer vollständig ausgerückten Betätigungsstellung, in der zwischen Eingangs- und Ausgangsteil im Wesentlichen keine Kraftübertragung erfolgt, bis hin zu einer vollständig eingerückten Betätigungsstellung, in der zwischen Eingangs- und Ausgangsteil im Wesentlichen eine vollständige Kraftübertragung erfolgt, betätigungsabhängig eine zunehmende Kraftübertragung ermöglicht, wobei eine Kraftübertragung zwischen Eingangs- und Ausgangsteil reibschlüssig erfolgt. Umgekehrt erfolgt ausgehend von einer vollständig eingerückten Betätigungsstellung, in der zwischen Eingangsund Ausgangsteil im Wesentlichen eine vollständige Kraftübertragung erfolgt, bis hin zu einer vollständig ausgerückten Betätigungsstellung, in der zwischen Eingangs- und Ausgangsteil im Wesentlichen keine Kraftübertragung erfolgt, betätigungsabhängig eine abnehmende Kraftübertragung.

Eine "Doppelkupplung" weist brennkraftmaschinenseitig ein Eingangsteil auf, das ein Gehäuse oder einen Deckel, eine Druckplatte und zwei Anpressplatten umfasst. Getriebeseitig weist die Doppelkupplung ein erstes und ein zweites Ausgangsteil auf, das jeweils wenigstens eine Kupplungsscheibe umfasst. Mit der Doppelkupplung können das Eingangsteil einerseits und das erste Ausgangsteil und/oder das zweite Ausgangsteil andererseits miteinander verbunden oder voneinander getrennt werden. Zudem kann ein Kraftfluss vom Eingangsteil in übergehendem Wechsel von dem ersten Ausgangsteil auf das zweite Ausgangsteil und umgekehrt verlagert werden.

Die Leistungsübertragungseinrichtung kann einen mechanischen Schleifring zur Übertragung elektrischer Energie ersetzen. Eine Verkoppelung zwischen Stator und Rotor kann mithilfe magnetischer Felder erfolgen. Verschleiß und Wartungsaufwand können verringert sein. Der Stator und der Rotor können eine elektrische Wicklung aufweisen. Der Stator und der Rotor können einen Eisen- oder Ferritkern aufweisen. In die Wicklung kann ein elektrisches Wechselsignal einspeisbar sein. An der Wicklung kann ein elektrisches Wechselsignal abgreifbar sein. Ein Wechselsignal kann mithilfe der Leistungsquelle erzeugbar sein. Der Stator kann mit der Leistungsquelle elektrisch verbunden sein. Der Rotor kann mit dem Aktuator elektrisch verbunden sein.

Der elektrische Kontakt kann ein Kontakt zwischen zwei relativ zueinander bewegbaren Teilen sein. Der elektrische Kontakt kann ein erstes Kontaktteil und ein zweites Kontaktteil aufweisen. Das erste Kontaktteil und das zweite Kontaktteil können miteinander elektrisch verbunden sein. Das erste Kontaktteil und das zweite Kontaktteil können relativ zueinander bewegbar sein. Der elektrische Kontakt kann zusätzlich zu dem induktiven Drehübertrager vorhanden sein. Der elektrische Kontakt kann dem induktiven Drehübertrager funktional entsprechen. Der elektrische Kontakt kann bei einem regulären Betrieb der Leistungsübertragüngseinrichtung ungenutzt sein. Der elektrische Kontakt kann bei einer beeinträchtigten Funktion des induktiven Drehübertragers genutzt sein.

Mit der erfindungsgemäßen Leistungsübertragungseinrichtung kann eine Leistungsversorgung des Aktuators redundant erfolgen. Bei einer beeinträchtigten Funktion des induktiven Drehübertragers kann eine Leistungsversorgung des Aktuators mithilfe des elektrischen Kontakts erfolgen. Damit ist eine Ausfall-, Funktions- und/oder Betriebssicherheit erhöht. Es ist eine funktionelle Redundanz gegeben. Eine zusätzliche redundante Einrichtung, wie mechanische Feder, elektrischer Pufferspeicher, zusätzlicher Transformator Drehübertrager, kann entfallen. Aufgrund der Nutzung bereits vorhandener Lager, wie Rillenkugellager, entstehen nur geringe Zusatzkosten.

Die Leistungsübertragungseinrichtung kann zur drehbaren Lagerung des Rotors wenigstens ein Lager aufweisen und mithilfe des wenigstens einen Lagers kann ein elektrischer Kontakt gebildet sein. Das Lager kann zwei zueinander drehbare Lagerteile aufweisen. Die Lagerteile können Kontaktteile des elektrischen Kontakts sein. Das Lager kann weitere Lagerteile aufweisen. Zwischen den zwei zueinander drehbaren Lagerteilen können weitere Lagerteile angeordnet sein. Die weiteren Lagerteile können die zwei zueinander drehbaren Lagerteile miteinander elektrisch verbinden. Das wenigstens eine Lager kann ein ohnehin vorhandenes Lagers sein, das zusätzlich als elektrischer Kontakt genutzt ist. Damit kann ein elektrischer Kontakt auf besonders bauraumsparende Weise geschaffen sein.

Das wenigstens eine Lager kann ein Wälzlager, insbesondere ein Rillenkugellager, sein. Das Lager kann einen Innenring und einen Außenring aufweisen. Zwischen dem Innenring und dem Außenring können Wälzkörper angeordnet sein. Zumindest eine Oberfläche des Innenrings, des Außenrings und der Wälzkörper kann elektrisch leiten sein. Der Innenring, der Außenring und der Wälzkörper können aus Metall, wie Stahl, hergestellt sein. Mit dem wenigstens einen Lager kann zwischen dem Stator und dem Rotor ein definierter Luftspalt eingestellt sein.

Das wenigstens eine Lager kann einen Pol des elektrischen Kontakts bilden. Dieser Pol kann ein Plus-Pol sein. Ein entgegengesetzter Pol des elektrischen Kontakts kann mithilfe eines Fahrzeugmasseanschlusses gebildet sein. Der entgegengesetzte Pol kann ein Minus-Pol sein. Der Fahrzeugmasseanschluss kann ein Potential Null Volt definieren und ein Bezugspotential für Signal- und/oder Betriebsspannungen darstellen. Der Fahrzeugmasseanschluss kann eine Fahrzeugkarosserie zugeordnet sein. Der Fahrzeugmasseanschluss kann einem Gehäuse des Drehübertragers zugeordnet sein. Der entgegengesetzte Pol kann mithilfe eines Zweimassenschwungrads gebildet sein. Das Zweimassenschwungrad kann mit einer Kurbelwelle der Brennkraftmaschine elektrisch verbunden sein.

Die Leistungsübertragungseinrichtung kann wenigstens zwei Lager aufweisen und die wenigstens zwei Lager können entgegengesetzte Pole des elektrischen Kontakts bilden. Die wenigstens zwei Lager können voneinander elektrisch getrennt sein. Die wenigstens zwei Lager können voneinander galvanisch getrennt sein. Die wenigstens zwei Lager können mithilfe eines Kunststoffabschnitts elektrisch voneinander isoliert sein. Zur elektrischen Trennung der wenigstens zwei Lager voneinander können zwischen den wenigstens zwei Lagern und dem Rotor Kunststoffteile angeordnet sein. Die Reibungskupplungseinrichtung kann eine Doppelkupplungseinrichtung mit zwei elektrischen Aktuatoren sein.

Zusammenfassend und mit anderen Worten dargestellt ergibt sich somit durch die Erfindung unter anderem eine Redundanz eines Transformator Drehübertragers. Der für eine Stromversorgung verwendete Transformator Drehübertrager kann zur Lagerung zwischen der stehenden und der drehenden Spule mindestens eine Lagerung aufweisen, um ein konstantes Lüftspiel zu gewährleisten. Bevorzugt können zwei - galvanisch getrennte - Lager zum Einsatz kommen. Diese Lager können nun dazu verwendet werden, bei Ausfall des eigentlichen Transformator Drehübertragers, den benötigten Strom zu übertragen. Dies kann sowohl bei stehender als auch drehender Kupplung funktionieren, wenn immer mindestens eine Kugel (bei Verwendung eines Rillenkugellagers) in Verbindung steht. Dabei kann ein Lager den Plus-Pol und das andere Lager den Minus-Pol darstellen. Bei Verwendung nur eines Lagers kann es erforderlich sein, sicher zu stellen, dass, beispielsweise über das Zweimassenschwungrad, welches wiederum an der Kurbelwelle verschraubt ist, ein Potential besteht.

Nachfolgend werden Ausführungsbeispiele der Erfindung unter Bezugnahme auf Figuren näher beschrieben. Aus dieser Beschreibung ergeben sich weitere Merkmale und Vorteile. Konkrete Merkmale dieser Ausführungsbeispiele können allgemeine Merkmale der Erfindung darstellen. Mit anderen Merkmalen verbundene Merkmale dieser Ausführungsbeispiele können auch einzelne Merkmale der Erfindung darstellen.

Es zeigen schematisch und beispielhaft:
- Fig. 1: einen Transformator Drehübertrager mit einem Stator und einem Rotor in perspektivischer Ansicht,
- Fig. 2: einen Transformator Drehübertrager mit einem Stator, einem Rotor und Kugellagern in Schnittansicht und
- Fig. 3: eine Schaltungsdarstellung eines Transformator Drehübertragers mit mithilfe zweier Kugellager integrierter Redundanz.

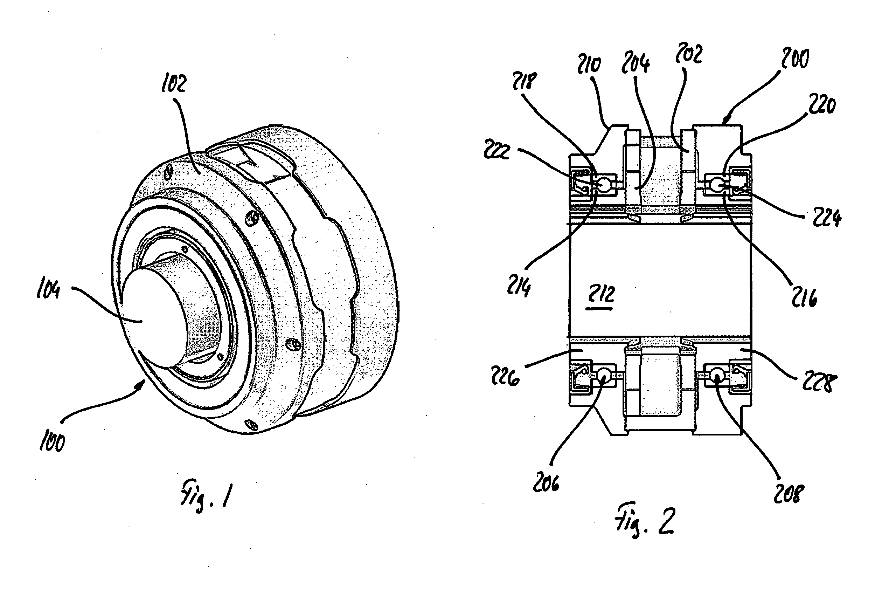

Fig. 1 zeigt einen Transformator Drehübertrager 100 mit einem Stator 102 und einem Rotor 104 in perspektivischer Ansicht. Der Stator 102 und der Rotor 104 sind relativ zueinander um eine gemeinsame Achse drehbar. Mit dem Transformator Drehübertrager 100 kann berührungslos induktiv elektrische Energie zwischen dem Stator 102 und der Rotor 104 übertragen werden. Der Stator 102 kann mit einer Leistungsquelle verbunden sein. Der Rotor 104 kann mit einem elektrischen Aktuatoren verbunden sein. Der Stator 102 und der Rotor 104 weisen jeweils einen Eisen- oder Ferritkern und eine Spulenanordnung auf. Mithilfe der Leistungsquelle ist in der Wicklung des Stators 102 ein Wechselsignal erzeugbar. Das Wechselsignal ist berührungslos von dem Stator 102 auf den Rotor 104 übertragbar. An der Wicklung des Rotors 104 kann das Wechselsignal abgegriffen und den Aktuatoren zugeführt werden.

Der Drehübertrager 100 dient zur berührungslosen Übertragung einer elektrischen Leistung zu einem Aktuator einer Doppelkupplung mit zwei Aktuatoren. Die Aktuatoren sind an der Doppelkupplung angeordnet und drehen mit dieser. Der Rotor 104 des Drehübertragers 100 dreht mit der Doppelkupplung und den Aktuatoren. Der Stator 102 des Drehübertragers 100 ist drehfest angeordnet.

Fig. 2 zeigt einen Transformator Drehübertrager 200 mit einem Stator 202, einem Rotor 204 und Kugellagern 206, 208 in Schnittansicht. Der Stator 202 weist ein Gehäuse 210 des Drehübertragers 200 auf. Der Rotor 204 weist eine gegenüber dem Gehäuse 210 drehbare Welle 212 auf. Mithilfe der Kugellager 206, 208 ist der Rotor 204 gegenüber dem Stator 202 drehbar gelagert.

Die Kugellager 206, 208 sind Rillenkugellager und weisen jeweils einen wellenfesten Innenring 214, 216, einen gehäusefesten Außenring 218, 220 und dazwischen angeordnete Kugeln, wie 222, 224, als Wälzkörper auf. Die Innenringe 214, 216 der Kugellager 206, 208 sind elektrisch isoliert an der Welle 212 bzw. an dem Rotor 204 angeordnet. Vorliegend sind die Innenringe 214, 216 der Kugellager 206, 208 mithilfe von Kunststoffteilen 226, 228 an der Welle 212 bzw. an dem Rotor 204 elektrisch isoliert angeordnet.

Die Kugellager 206, 208 dienen als elektrischer Kontakt zur berührend leitenden Übertragung elektrischer Energie von der Leistungsquelle zu den Aktuatoren für den Fall, dass die berührungslose induktive Leistungsübertragung mit dem Drehübertrager 200 einer Funktions- oder Betriebsstörung unterliegt. Die Kugellager 206, 208 bilden zwei Pole, mit denen die Aktuatoren verbunden sind. Vorliegend bildet das Kugellager 206 den Minuspol und das Kugellager 208 den Pluspol. Bei einer anderen Ausführung kann das Kugellager 206 den Pluspol und das Kugellager 208 den Minuspol bilden. Damit ist eine redundante Leistungsversorgung der Aktuatoren gegeben. Bei einer Funktions- oder Betriebsstörung der berührungslosen induktiven Leistungsübertragung kann eine berührend leitende Leistungsübertragung erfolgen, insbesondere, um eine Kupplung zu öffnen und einen Drehmomentfluss im Antriebsstrang zu unterbrechen. Im Übrigen wird auf Fig. 1 und die zugehörige Beschreibung verwiesen.

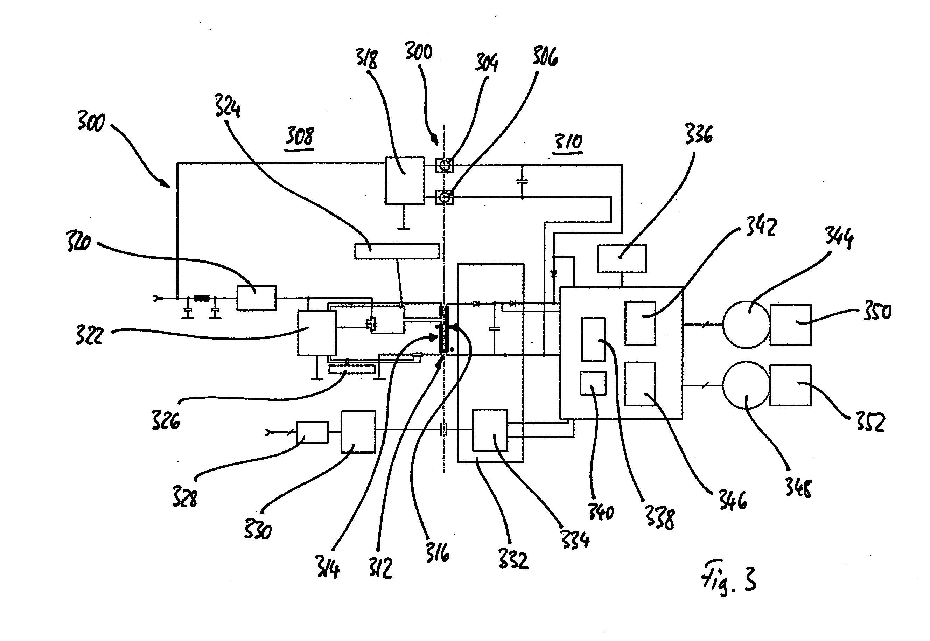

Fig. 3 zeigt eine Schaltungsdarstellung 300 eines Transformator Drehübertragers 302 mit mithilfe zweier Kugellager 304, 306 integrierter Redundanz. In der linken Hälfte der Fig. 3 ist der stehende Teil 308 des Drehübertragers 302 dargestellt. In der rechten Hälfte der Fig. 3 ist der drehende Teil 310 des Drehübertragers 302 dargestellt.

Zwischen dem stehenden Teil 308 und dem drehenden Teil 310 des Drehübertragers 302 ist eine Einrichtung 312 zur induktiven Leistungsübertragung mit einer Primärseite 314 und einer Sekundärseite 316 angeordnet.

Die dem stehenden Teil 308 zugeordneten Teile der Kugellager 304, 306 sind elektrisch mit einer Einrichtung 318 zur Spannungsaufbereitung und -stabilisierung verbunden. Der stehende Teil 308 des Drehübertragers 302 weist außerdem eine Einrichtung 320 zur Spannungsstabilisierung, einen Schaltregler 322, eine Einrichtung 324 zur Rückmessung einer Spannung auf der Sekundärseite entsprechend dem drehenden Teil 310 des Drehübertragers 302 und eine Einrichtung 326 zur Strommessung auf. Weiterhin weist der stehende Teil 308 des Drehübertragers 302 einen CAN-Transceiver 328 und einen Übertrager 330 zum Senden und/oder Empfangen auf.

Der drehende Teil 310 des Drehübertragers 302 weist eine Einrichtung 332 zur Sekundärspannungsversorgung und Datenübertragung mit einem Übertrager 334 zum Senden und/oder Empfangen, eine Momentensensorik 336, eine Recheneinheit 338, eine Einrichtung 340 zur Überwachung, eine erste Elektromotor-Endstufe 342 zur Ansteuerung eines ersten Elektromotors 344 und eine zweite Elektromotor-Endstufe 346 zur Ansteuerung eines zweiten Elektromotors 348 auf. Der erste Elektromotor 344 dient zur Betätigung einer Aktorik 350 einer ersten Kupplungseinrichtung einer Doppelkupplung. Der zweite Elektromotor 346 dient zur Betätigung einer Aktorik 352 einer zweiten Kupplungseinrichtung einer Doppelkupplung. Eine primärseitige Spannung kann beispielsweise 18 V betragen. Eine sekundärseitige Spannung kann beispielsweise 20 V ± 2 V betragen. Im Übrigen wird auf Fig. 1 und Fig. 2 sowie die zugehörige Beschreibung verwiesen.

### Bezugszeichenliste

- 100: Drehübertrager
- 102: Stator
- 104: Rotor

- 200: Drehübertrager
- 202: Stator
- 204: Rotor
- 206: Kugellager
- 208: Kugellager
- 210: Gehäuse
- 212: Welle
- 214: Innenring
- 216: Innenring
- 218: Außenring
- 220: Außenring
- 222: Kugel
- 224: Kugel
- 226: Kunststoffteil
- 228: Kunststoffteil

- 300: Schaltungsdarstellung
- 302: Drehübertrager
- 304: Kugellager
- 306: Kugellager
- 308: Teil
- 310: Teil
- 312: Einrichtung
- 314: Primärseite
- 316: Sekundärseite
- 318: Einrichtung
- 320: Einrichtung
- 322: Schaltregler
- 324: Einrichtung
- 326: Einrichtung
- 328: CAN-Transceiver
- 330: Übertrager
- 332: Einrichtung
- 334: Übertrager
- 336: Momentensensorik
- 338: Recheneinheit
- 340: Einrichtung
- 342: Elektromotor-Endstufe
- 344: Elektromotor
- 346: Elektromotor-Endstufe
- 348: Elektromotor
- 350: Aktorik
- 352: Aktorik

## Patentansprüche

1. Elektrische Leistungsübertragungseinrichtung (100, 200) für eine drehbare Reibungskupplungseinrichtung, insbesondere für ein brennkraftmaschinengetriebenes Kraftfahrzeug, die Reibungskupplungseinrichtung aufweisend einen induktiven Drehübertrager (202, 204, 312) mit einem einer elektrischen Leistungsquelle zugeordneten Stator (202, 314) und einem dem wenigstens einen Aktuator (344, 348) zugeordneten Rotor (204, 316) zur berührungslosen Übertragung elektrischer Energie zwischen dem Stator (202, 314) und dem Rotor (204, 316),
**dadurch gekennzeichnet, dass**
die Reibungskupplungseinrichtung eine Betätigungseinrichtung (350,352) mit wenigstens einem mit der Reibungskupplungeinrichtung drehbaren elektrischen Aktuator (344,348) aufweist,
bei der die Leistungsübertragungseinrichtung (100, 200) einen elektrischen Kontakt zur berührend leitenden Übertragung elektrischer Energie von der Leistungsquelle zu dem wenigstens einen Aktuator (344, 348) aufweist.

2. Leistungsübertragungseinrichtung (100, 200) nach Anspruch 1, **dadurch gekennzeichnet, dass** die Leistungsübertragungseinrichtung (100, 200) zur drehbaren Lagerung des Rotors (104, 204, 316) wenigstens ein Lager (206, 208, 304, 306) aufweist und mithilfe des wenigstens einen Lagers (206, 208, 304, 306) ein elektrischer Kontakt gebildet ist.

3. Leistungsübertragungseinrichtung (100, 200) nach Anspruch 2, **dadurch gekennzeichnet, dass** das wenigstens eine Lager (206, 208, 304, 306) ein Wälzlager, insbesondere ein Rillenkugellager, ist.

4. Leistungsübertragungseinrichtung (100, 200) nach einem der Ansprüche 2-3, **dadurch gekennzeichnet, dass** das wenigstens eine Lager (206, 208, 304, 306) einen Pol des elektrischen Kontakts bildet.

5. Leistungsübertragungseinrichtung (100, 200) nach Anspruch 4, **dadurch gekennzeichnet, dass** ein entgegengesetzter Pol des elektrischen Kontakts mithilfe eines Fahrzeugmasseanschlusses gebildet ist.

6. Leistungsübertragungseinrichtung (100, 200) nach einem der vorhergehenden Ansprüche, **dadurch gekennzeichnet, dass** die Leistungsübertragungseinrichtung (100, 200) wenigstens zwei Lager (206, 208, 304, 306) aufweist und die wenigstens zwei Lager (206, 208, 304, 306) entgegengesetzte Pole des elektrischen Kontakts bilden.

7. Leistungsübertragungseinrichtung (100, 200) nach Anspruch 6, **dadurch gekennzeichnet, dass** die wenigstens zwei Lager (206, 208, 304, 306) voneinander elektrisch getrennt sind.

8. Leistungsübertragungseinrichtung (100, 200) nach Anspruch 7, **dadurch gekennzeichnet, dass** zur elektrischen Trennung der wenigstens zwei Lager (206, 208, 304, 306) voneinander zwischen den wenigstens zwei Lagern (206, 208, 304, 306) und dem Rotor (104, 204, 316) Kunststoffteile (226, 228) angeordnet sind.

9. Leistungsübertragungseinrichtung (100, 200) nach einem der vorhergehenden Ansprüche, **dadurch gekennzeichnet, dass** die Reibungskupplungseinrichtung eine Doppelkupplungseinrichtung mit zwei elektrischen Aktuatoren (344, 348) ist.

## Claims

1. Electrical power transmission device (100, 200) for a rotatable friction clutch device, in particular for a motor vehicle which is driven by an internal combustion engine, the friction clutch device having an inductive rotary transmitter (202, 204, 312) comprising a stator (202, 314), which is associated with an electrical power source, and a rotor (204, 316), which is associated with the at least one actuator (344, 348), for contactlessly transmitting electrical energy between the stator (202, 314) and the rotor (204, 316), **characterized in that** the friction clutch device has an operating device (350, 352) comprising at least one electrical actuator (344, 348), which can rotate with the friction clutch device, in which friction clutch device the power transmission device (100, 200) has an electrical contact for conductively transmitting electrical energy from the power source to the at least one actuator (344, 348) with contact.

2. Power transmission device (100, 200) according to Claim 1, **characterized in that** the power transmission device (100, 200) has at least one bearing (206, 208, 304, 306) for rotatably mounting the rotor (104, 204, 316), and electrical contact is formed with the aid of the at least one bearing (206, 208, 304, 306).

3. Power transmission device (100, 200) according to Claim 2, **characterized in that** the at least one bearing (206, 208, 304, 306) is a roller bearing, in particular a deep-groove ball bearing.

4. Power transmission device (100, 200) according to either of Claims 2 and 3, **characterized in that** the at least one bearing (206, 208, 304, 306) forms a pole of the electrical contact.

5. Power transmission device (100, 200) according to Claim 4, **characterized in that** an opposing pole of the electrical contact is formed with the aid of a vehicle earth connection.

6. Power transmission device (100, 200) according to one of the preceding claims, **characterized in that** the power transmission device (100, 200) has at least two bearings (206, 208, 304, 306), and the at least two bearings (206, 208, 304, 306) form opposing poles of the electrical contact.

7. Power transmission device (100, 200) according to Claim 6, **characterized in that** the at least two bearings (206, 208, 304, 306) are electrically isolated from one another.

8. Power transmission device (100, 200) according to Claim 7, **characterized in that** plastic parts (226, 228) are arranged between the at least two bearings (206, 208, 304, 306) and the rotor (104, 204, 316) in order to electrically isolate the at least two bearings (206, 208, 304, 306) from one another.

9. Power transmission device (100, 200) according to one of the preceding claims, **characterized in that** the friction clutch device is a double clutch device with two electrical actuators (344, 348).

## Revendications

1. Dispositif de transmission de puissance électrique (100, 200) pour un dispositif d'embrayage à friction rotatif, en particulier pour un véhicule automobile entraîné par un moteur à combustion interne, le dispositif d'embrayage à friction présentant un transmetteur rotatif inductif (202, 204, 312) avec un stator (202, 314) associé à une source de puissance électrique et un rotor (204, 316) associé à au moins un actionneur (344, 348) pour la transmission d'énergie électrique sans contact entre le stator (202, 314) et le rotor (204, 316),
**caractérisé en ce que**
le dispositif d'embrayage à friction présente un dispositif d'actionnement (350, 352) avec au moins un actionneur électrique (344, 348) pouvant tourner avec le dispositif d'embrayage à friction, le dispositif de transmission de puissance (100, 200) présentant un contact électrique pour la transmission d'énergie électrique par conduction par contact de la source de puissance à l'au moins un actionneur (344, 348).

2. Dispositif de transmission de puissance (100, 200) selon la revendication 1, **caractérisé en ce que** le dispositif de transmission de puissance (100, 200), pour le support rotatif du rotor (104, 204, 316), présente au moins un palier (206, 208, 304, 306) et un contact électrique est formé à l'aide de l'au moins un palier (206, 208, 304, 306).

3. Dispositif de transmission de puissance (100, 200) selon la revendication 2, **caractérisé en ce que** l'au moins un palier (206, 208, 304, 306) est un palier à roulement, en particulier un roulement rainuré à billes.

4. Dispositif de transmission de puissance (100, 200) selon l'une quelconque des revendications 2 à 3, **caractérisé en ce que** l'au moins un palier (206, 208, 304, 306) forme un pôle du contact électrique.

5. Dispositif de transmission de puissance (100, 200) selon la revendication 4, **caractérisé en ce qu'**un pôle opposé du contact électrique est formé à l'aide d'une borne de masse du véhicule.

6. Dispositif de transmission de puissance (100, 200) selon l'une quelconque des revendications précédentes, **caractérisé en ce que** le dispositif de transmission de puissance (100, 200) présente au moins deux paliers (206, 208, 304, 306) et les au moins deux paliers (206, 208, 304, 306) forment des pôles opposés du contact électrique.

7. Dispositif de transmission de puissance (100, 200) selon la revendication 6, **caractérisé en ce que** les au moins deux paliers (206, 208, 304, 306) sont séparés électriquement les uns des autres.

8. Dispositif de transmission de puissance (100, 200) selon la revendication 7, **caractérisé en ce que** pour la séparation électrique des au moins deux paliers (206, 208, 304, 306) les uns des autres, des pièces en plastique (226, 228) sont disposées entre les au moins deux paliers (206, 208, 304, 306) et le rotor (104, 204, 316).

9. Dispositif de transmission de puissance (100, 200) selon l'une quelconque des revendications précédentes, **caractérisé en ce que** le dispositif d'embrayage à friction est un dispositif à double embrayage avec deux actionneurs électriques (344, 348).
